# EUROPEAN PATENT SPECIFICATION

(11) **EP 2 373 765 B1**
(45) Date of publication and mention of the grant of the patent: **30.05.2018**
(21) Application number: 08875424.7
(22) Date of filing: 08.12.2008
(51) Int. Cl.: C10J 3/00, C10K 1/02, C10K 1/08, C10K 3/04

(54) **FLEXIBLE MODULAR SYSTEM FOR THE PRODUCTION OF HYDROGEN BY PLASMA GASIFICATION**
FLEXIBLES MODULARES SYSTEM ZUR HERSTELLUNG VON WASSERSTOFF DURCH PLASMAVERGASUNG
SYSTÈME MODULAIRE FLEXIBLE DE PRODUCTION D'HYDROGÈNE PAR GAZÉIFICATION PLASMA

(43) Date of publication of application: 12.10.2011
(73) Proprietor: Plagazi AB, 269 21 Båstad (SE)
(72) Inventor: RINGHEIM, Daniel, S-182 62 Djursholm (SE); GRANBERG, Torsten, S-269 34 Båstad (SE)
(74) Representative: Zacco Sweden AB
(86) International application number: PCT/EP2008/067010
(87) International publication number: WO 2010/066281

(56) References cited:
- EP-A- 0 849 435
- US-A- 5 319 176
- US-A1- 2004 251 241
- US-A1- 2005 070 751
- US-A1- 2006 272 559
- US-A1- 2008 202 028

## Description

### TECHNICAL FIELD

The present invention relates generally to a flexible modular system for the production of hydrogen comprising container modules connected to each other by means of an interface.

### BACKGROUND ART

Hydrogen is the most abundant element in the universe; however, there is no hydrogen in its pure form on earth. Hydrogen can be used as an energy carrier for the production of electric energy in fuel cells or as a highly valuable commodity as raw material in process industries. Hydrogen is very volatile and difficult to store and transport. Therefore the use of hydrogen in a greater scale is limited. Therefore, there is a great need to eliminate or at least decrease the need to transport hydrogen from the place of production to the place of usage. There are also different needs in different industries regarding the level of purity of hydrogen. In some industries highly pure hydrogen is not needed and therefore these industries are not willing to pay an extra amount for the purification. Vice versa in some industries a high level of hydrogen purity is essential.
There are several industries that use hydrogen, for example glass, steel, petroleum, vehicle and chemistry industry. Hydrogen can be used in the production of plane window glass in which a tin bath is used to make the glass plane. During this process hydrogen is used to create a reducing atmosphere. In the production of steel from iron it is possible to use hydrogen as a reducing element, such as for reducing steel surfaces. When using hydrogen in this process there are no emissions of greenhouse gases. In the petroleum industry a large amount of hydrogen is used for the reformation of hydro-carbon chains. With a new and increasing demand for diesel, refineries are looking to convert more of the petroleum to diesel instead of gasoline. During that process hydrogen is used. When using hydrogen and fuel cells in cars the overall efficiency is increased. When producing ammonia, hydrogen is reacted with nitrogen in a catalytic converter. Ammonia can be used for example in the production of fertilizers.

Since industrial processes develop continuously there is also a need to be able to adjust the level of purity of hydrogen accordingly. At the same time, depending on the location of an industry, different sources of energy, i.e. a feedstock, to the process or the system for the production of hydrogen, may be available. Accordingly, it is important that the system can utilize several kinds of feedstock and preferably in all forms, i.e. in gas, liquid and/or solid form. Therefore, there is a need to provide a system that is highly flexible and easily adjustable to the needs of different industries. There is also a need to produce hydrogen with higher efficiency than through electrolysis which is commonly used in industrial processes today.

Plasma gasification is known as an effective means for producing energy and hydrogen from organic material by converting the energy in the organic material into another state of energy in the hydrogen for later use as described for instance in US 7,163,758. In the prior art, most of the plasma generators use direct current (DC) to create an electric discharge. Plasma generators using alternating current are known in the prior art, but they are often unstable and they often require the use of a conducting material, such as a molten metal pool to enable the initiation of an arc. The use of DC or the requirements of conducting material to initiate an arc makes the systems inflexible and expensive to redesign and adjust to changing demands. US 6,215,678 describes a method and apparatus for treating waste comprising an arc plasma furnace and a joule heated melter as an integrated system with a gas turbine, internal combustion engine or fuel cell generating equipment which can be deployed in modular units and which can be scaled to handle large volumes of municipal solid waste. However, the system requires the use of conducting material to initiate the arc and is primarily suitable for using solid waste as a feedstock.
US2008/0202028 A1 discloses a plasma gasification system with an integrated control system. US20060272559 discloses a transportable plasma arc waste processing system arranged in cargo sized containers. There is a great need for easily transportable systems which can be easily adjusted or customized according to the needs of the users. Also the system should be easy to adjust to different industry locations and therefore the use of AC as a power source and the possibility to use organic material from different sources is important. Therefore there is a need to improve the prior art systems in such a way that the systems will become more easily transportable and adjustable and that the use of organic material in different forms of solid, liquid and gas is also enabled.
The object of the present invention is to provide an environmentally friendly system for producing energy from waste. Another object is to provide a system that is flexible, easy to adjust to different needs and easy to transport and redesign. Still another purpose is to facilitate the use of hydrogen in energy production or as raw material in industrial processes.

### SUMMARY OF THE INVENTION

The above-stated deficiencies and problems of the prior art systems are at least partly eliminated with the present invention in which organic material from for example biomass and waste is gasified in a modular system according to claim 1. Taking the use into account, the best way of opening the expansion of hydrogen usage is to eliminate the need to transport hydrogen. Especially, the solution according to the present invention is suited to satisfy needs of different customers with different hydrogen purity concerns. By arranging hydrogen separation stages in one or several modules comprising separation filters hydrogen can be extracted with different purity levels. This is a unique property.

The invention relates to a modular flexible system according to claim 1 that consists of container modules, hereinafter also called for modules, where every module has a specific task. The modular construction based on standard containers of the system facilitates the transportation and assembly of the system and the process can be tailored to each customer's individual needs. The system with modular construction facilities the replacement of modules during product upgrades. Conventional distribution of competing technologies is usually large projects run over long periods of time. The benefit with a modular construction is that the system can be moved and dismantled after usage in one location and be relocated to produce hydrogen in another location. The modular concept also facilitates the redesign of the facility when demands are changing. The invention is easy to set up near the customer thus eliminating the need of transporting the hydrogen. Only the feedstock, i.e. the organic material, must be transported to the process which is much easier, since especially near populated areas there are existing transporting and storage systems for waste.

The present invention relates to a flexible modular system for the production of hydrogen from organic material, which system comprises:
(i) at least one loading device or loading module;
(ii) at least one gasification module comprising at least one plasma generator, which is powered with an alternating current;
(iii) at least one gas cooling module;
(iv) at least one gas cleaning module comprising at least one gas cleaning device;
(v) at least one water-gas-shift and hydrogen separation module, wherein each of the modules is constructed as a standard container having a standard size. The modules are connected to each other by means of an interface which comprises coupling means and connections for a gas, electric power, and communication. The modules have a size of a standard ISO container and are adapted so as to be transported on a transport vehicle. The modules may have a size of standard containers and can have for example a length of five common standard lengths, i.e. 20-ft (6.1 m), 40-ft (12.2 m), 45-ft (13.7 m), 48-ft (14.6 m), and 53-ft (16.2 m). Therefore the modules can be transported as standard containers by any suitable vehicle, such as truck, train or boat. The modules are assembled together in preferred combination on site to form a customized gasification and hydrogen forming plant.

The modules are connected to each other by means of an interface. The interface in adjacent modules has same specifications and is connectable to the interface of the adjacent module. The interface may comprise coupling means, connections for water, electric power, gases (compressed air, syngas or hydrogen) and communication. These are all standard couplings to facilitate the set up and upgrades of the system.

According to one embodiment of the invention two or more cleaning modules are used to purify the gas so that the required level of purity of hydrogen is obtained. Through this arrangement the system can be adjusted to each customer's need.

According to the invention the plasma gas is directed from the discharge compartment of the generator comprising electrodes through an orifice to a chamber outside the discharge compartment in which chamber the plasma gas interacts with an organic material. Through this arrangement the plasma gas can be arranged to interact with any form of organic material, i.e. liquid, solid or gas. The organic material may be waste or carbonaceous fuels, such as natural gas, oil, coal, biomass, methane, C₁ to C₄ hydrocarbons, methanol, gasoline and diesel fuel. However, according to a preferred embodiment of the invention, the organic material is waste, either domestic or industrial, also hazardous waste may be used. Waste is often easily available and the transportation systems are readily available nearby the industrial plants, at least if the industry is located near a population centre.

According to one further embodiment of the invention the plasma generator is a three phase plasma generator. Through this arrangement it is possible to obtain a highly turbulent gas flow, which enables a complete interaction between the gas and the organic material.

According to one further embodiment of the invention the system may further comprise one or more additional modules selected from the group consisting of a loading module, gasification module, cleaning module, and water-gas-shift and hydrogen separation module. Through this arrangement it is possible to further customize the system according to the customer's needs.

Due to the fact that the modules can be easily connected to each other the system becomes flexible. The system can be placed and connected to an industrial plant requiring hydrogen in their processes and thereby transport of the hydrogen can be eliminated.

### BRIEF DESCRIPTION OF THE DRAWINGS

Figure 1 is a flow diagram that shows different steps of the process according to one embodiment of the invention.
Figure 2 is a schematic drawing showing an example of a gasification plant according to the present invention.
Figure 3 is a schematic drawing of an interface between the container modules according to one embodiment of the invention.
Figure 4 is an enlarged view of the connection between the waste module and the gasification module according to one embodiment of the invention.
Figure 5 is a schematic drawing of a plasma generator according to one embodiment of the invention.
Figure 6 schematically shows a water-gas-shift reaction.

### DETAILED DESCRIPTION

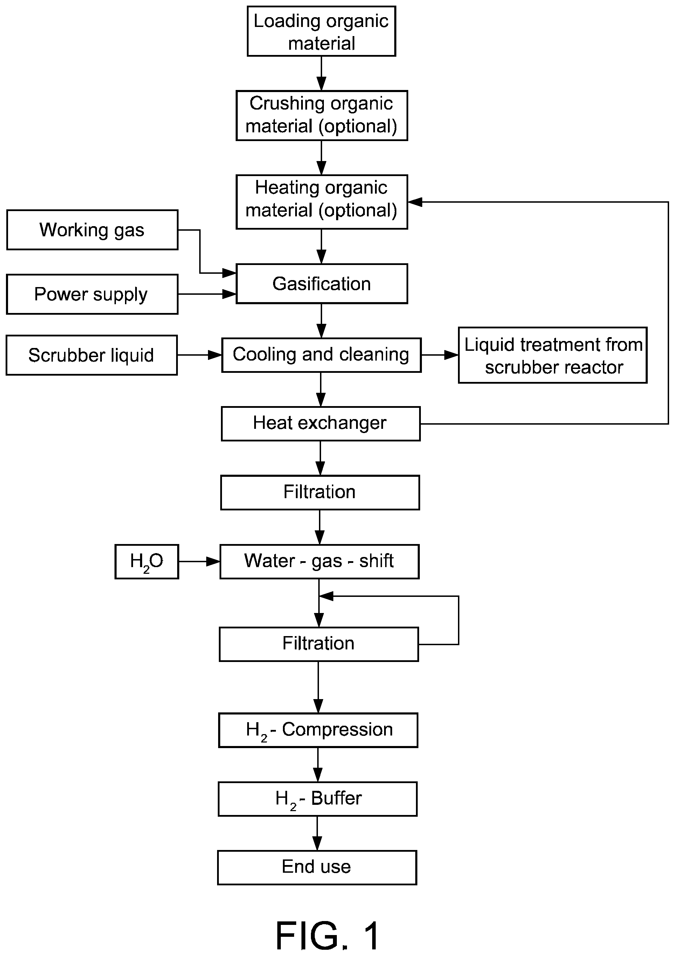

The process of the present invention is depicted in the flow chart in figure 1. Waste or other organic material is transported to a facility or industrial plant and loaded to the system. If the material consists of large pieces it can be optionally crushed using a crusher to increase the homogeneity of the material to be treated. With higher homogeneity in the organic material the entering of the atmospheric gases into the system can be controlled more easily. If the organic material has high humidity it can be dried in a drier through recycling of heat generated in the gas cooling sequence through a heat exchanger.

When the organic material has been treated it is lead to the gasification unit where the organic substances are gasified and formed to hydrogen, carbon monoxide and some traces of carbon dioxide. The gasification is done using at least one alternating current (AC) plasma generator which is supplied with a plasma forming working gas, which can be air, carbon dioxide, argon, steam or other suitable gases. A power system is connected to the plasma generator.

When the organic material has been gasified the gas is lead to a spray tower for a controlled cooling of the gas. Re-circulated water is connected to the spray tower and different additives are added to the water to clean the gas. Depending on different waste types, different additives are used.

After cooling of the gas the heat generated from this cooling process is extracted through a heat exchanger which is connected to a pre-treatment module comprising means for pre-heating or drying of the organic material. In this way the total efficiency of the system is increased.

When cooling and cleaning of the gas is terminated the gas, depending on the properties of the organic material and the composition of the chemicals, is lead through a series of filters to even further ensure the purity of the gas.

The clean gas is lead into a water-gas-shift stage where carbon monoxide reacts with water over a catalytic material to produce hydrogen and carbon dioxide. Hydrogen is then separated through at least one stage of membrane filtration and/or with the use of pressure swing adsorption where the gas is circulated to ensure a high and efficient yield of hydrogen. Through the separation carbon dioxide can be extracted and used in applications or, if the infrastructural conditions allow it, be harnessed and deposited. Through the deposit of carbon dioxide the invention actively reduces the amount of atmospheric carbon dioxide.

Finally the hydrogen is compressed to be stored in a buffer. The end product consists of pure hydrogen, suitable for process industries, produced from organic material, such as waste. The efficiency can be very high and about 95 % of the energy contained in the waste may be converted to usable energy in the synthetic gas.

The system described above comprises container modules, hereinafter also called modules, wherein each module has its own technical task, as described later in the application. The modules are formed as standard ISO (International Standard Organization) containers and have the same specifications as standard ISO containers, also called shipping containers, that can be loaded, fitted and coupled with standard container couplings onto container ships, railroad cars, planes and trucks. The containers are available in several lengths wherein the most common lengths are about 6,06 m (20 ft.), 12,19 m (40 ft.) and 13,72 m (45 ft.), but also other standard lengths can be used. The containers preferably have a standard width of about 2,44 m (8 ft.) and a height of from about 2,59 m to about 2,90 m. The containers comprise a standard container corner, a corner casting, that enables the piling up and fastening of containers onto a platform.

On the industrial site and place for use of the system, the container modules can be directly placed on the ground that has been prepared for the system. Since the modules are constructed in standard sizes and shapes they are adapted for easy handling and transportation and can thereby be lifted, handled and transported in the same way as any standard containers. The system can be assembled onsite and can be in operation within short time. The length, width and height of the modules can be varied within any standard lengths.

Between the modules a standardized interface is used for power, gas and communication. The interface enables for instance the change of components within hours instead of days and weeks. This is a very important aspect due to the customer demands.

The system is based on plasma gasification of organic material, especially waste and biomass. A synthetic gas is obtained from the organic substances in waste. The synthetic gas obtained from the plasma gasification of the organic material mainly contains hydrogen, carbon monoxide, and some amounts of carbon dioxide and water. If air is used as the working gas, that is the gas that is initially injected into the plasma gasification reactor, nitrogen will follow in the gas stream.

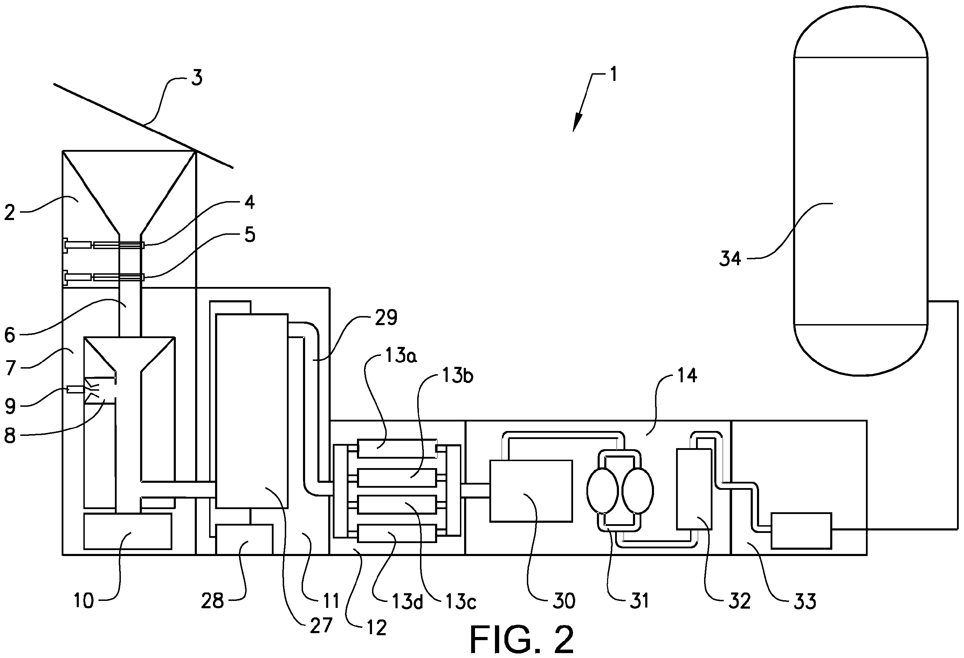

Figure 2 schematically shows a plasma gasification system 1 according to one embodiment of the invention. The system comprises container modules 2, 7, 11, 12, 14, 33 and 34 each of which modules has a specific task.

The system preferably includes equipment for the loading of organic material. Therefore, the system 1 preferably comprises a loading module 2 or a loading device in which the organic material is handled before entering the gasification module. The organic material may be e.g. residential or municipal waste. Such waste is incinerated in large plants as a volume reducing method. In many cases heat is produced for district heating and in a few cases electric energy is produced from the incineration of these wastes.

The system in figure 2 comprises a loading module 2 for organic material. The loading module 2 may optionally comprise a device for crushing the organic material into a smaller particle size that is more suitable for the process (not shown).

The loading module 2 may also comprise an optional system for drying the organic material prior to entering the gasification module 7. The system may for instance use heat which is obtained from a heat exchanger connected to a heat transfer from a gas cooling module. The module comprises a top cover 3 which can be opened to enable the feeding of the material into the system. The loading module preferably comprises a lock-hopper system 4, 5 which enables a batch-wise feeding of the organic material into the system and also at least partially prevents atmospheric gases from entering the system. Other technical arrangements that enable the control of the amount of organic material and air entering the system can of course be used. In the lock hopper system shown in figure 2 the lower lock 5 is kept closed while the upper lock 4 is open and the material is loaded into the system. When a predefined amount of material has entered into the lock hopper system, the upper lock 4 is closed and the lower lock 5 is opened to allow the organic material to enter the gasification module 7 via a shaft 6. Through this arrangement it is possible to control the amount of organic material and air entering the system. Since the atmospheric gases in the air can affect the gasification process and thereby the composition of the obtained synthetic gas, it is important that the amount of air entering the system can be controlled. For example a balance of the oxidation grade, i.e. ratio CO:CO₂ can be rubbed if too much air enters the system. The lock hopper arrangement can be controlled by any suitable means, such as by hydraulic, electric or pneumatic means.

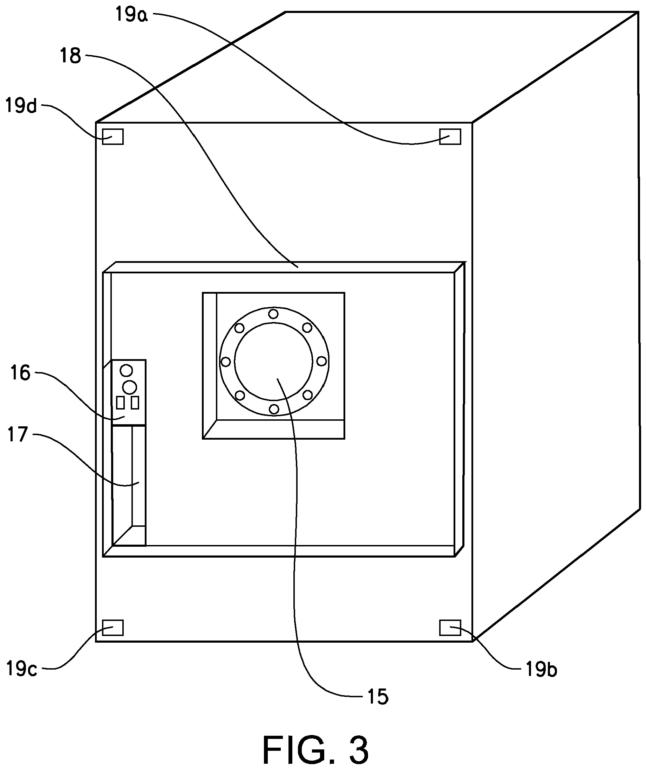

The organic material is lead to the gasification module via a shaft 6 to the gasification module 7. The modules are connected to each other by means of an interface, which is schematically shown in Figure 3. The interface comprises connecting means 19a, 19b, 19c and 19d which connect the modules to each other. The modules also comprise standard container couplings which are not shown in the figure. There are preferably at least one connecting means in each corner of the container module. However, the amount of connecting means can be varied, and for example further connecting means can be placed on the edges in between the connecting means in the corners of the container. The connecting means are preferably resilient flanged connectors which enable minor movements and radial deviations between the modules. Due to the connecting means, there is no need to weld the modules together. Thereby mounting and demounting of the modules is simplified. The interface further comprises an opening 15 for a gas channel where the material to be gasified and/or which has been gasified is lead through. Further, a connection 16 for electrical cables, and data and network cables, and a space 17, where the cables may be fastened when the modules are assembled together, are provided. The modules may include control systems for an automatic handling of organic material and communication with the user and the following modules. These systems are commercially available and are not closely described herein. Further channels may be provided for e.g. water and communication. The interface further comprises a flange 18 of resilient material which constitutes a weather shield for the interface. The flange preferably surrounds the gas opening 15, cable connection 16 and the cable storage space 17 to shield these connections from dirt and rain and/or snow. All the container modules comprise at least one interface towards at least one adjacent container module. The interface has preferably same specifications, that is for example size and structure of connecting means, in all modules. This enables an easier construction of the system and also customization according to the needs of the customer.

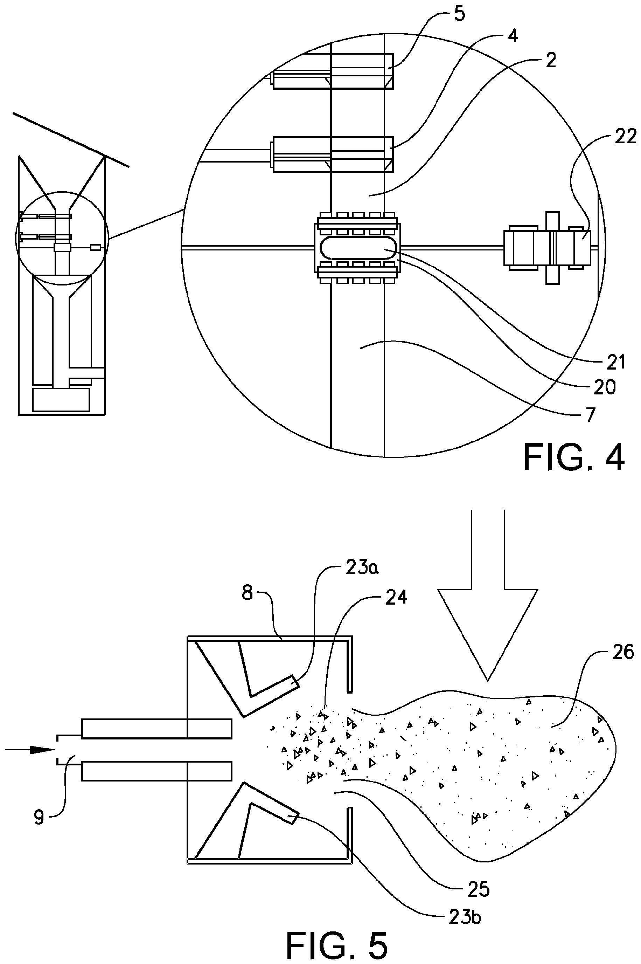

Figure 4 depicts a detailed schematic view of a connection between the loading module and the gasification module. According to the embodiment shown in Figure 4, a flexible connecting means 19 is provided between the loading module 2 and the gasification module 7. The flexible connecting means comprises an inner resilient member 20 which allows minor radial movements and enables a simpler connecting of the container modules to each other and thereby also enables an easier mounting of the whole system. An example of a connection member is depicted by 22.

The gasification module comprises at least one plasma generator powered with alternating current. The plasma gasification container module is insulated with heat resistant materials and is adapted to withstand temperatures reaching about 1200-1700°C. Due to the high temperature the process does not produce dioxins.

The primary reaction in the plasma gasification module is:

*CₙHₘ* + {*working gas*} → *CO* + *H*₂ + {*CO*₂ + *N*₂ + *H*₂*O*}

The gasification module 7 comprises at least one alternating current plasma generator 8 as is shown in figure 5. The plasma forming working gas is injected through a connection 9 to the electrodes 23a and 23b. The working gas can consist of, but is not limited to, air, nitrogen, argon, carbon dioxide and natural gas. The working gas is ionized by means of the electrodes in a discharge compartment 24 and is fed through an orifice 25 to a chamber 26 outside the discharge compartment 24 in which chamber 26 the plasma gas interacts with the organic material. The organic material to be treated falls downwards in the gasification module, as depicted by the arrow in figure 5.

The organic material is thereby converted into gaseous hydro carbons and particles. The plasma gasification module 7 is insulated to maintain the right temperature properties within the module. The organic material is then pushed through the module and the product gas is lead to the next step of the process, i.e. cooling and cleaning and the slag material and metals are lead to a container 10 in the bottom of the gasification module. Additional plasma generators may be incorporated in the system if required so that the total gasification and disassociation of remaining chemicals can be ensured.

A power connection for alternating current (AC) is connected to electrodes where the discharge takes place. There are preferably three primary electrodes, but the amount of electrodes is not limited to three. The amount of electrodes can be varied depending on the requirements the process has on the efficiency of the plasma generator. A plasma generator with three electrodes is preferably used since the power connection can then be connected to a 3-phase power supply which is commonly used as an industrial power source. The voltage used to initiate an arc inside the generator may be relatively low, from about 220-480 VAC, and preferably 400 VAC at a frequency of from 50 to 60 Hz. The discharge occurs at a frequency from 200-500 Hz between the electrodes. Through the use of AC plasma generator, turbulence is created. A plasma generator useful in the present invention is schematically shown in Figure 5. The working gas, e.g. air, is injected through a channel 9 into a chamber where the electrodes 23a and 23b (the third electrode is not shown in the figure) are located. The working gas reacts between the electrodes and the hot, highly turbulent, ionized gas leaves the compartment 24 and interacts with the organic material. The organic material falls vertically and the plasma gas is fed about perpendicularly against the organic material as shown in figure 5. The gas is lead form the gasification module 7 to a cooling module 11 which harnesses the cooling and partial water solvent cleaning, and as shown in figure 2.

The cooling module 11 may comprise a cleaning system which is designed to partially clean the gas from impurities such as sulfur and chlorine. The gas containing impurities is purified by means of a scrubber reactor 27 in which the gas is reacted with a scrubber liquid that removes the impurities from the gas through a chemical reaction. A composition of the scrubber liquid depends on the kind of the impurity/impurities to be removed. A general principle for a scrubber is that a gas to be cleaned is fed from the bottom of the scrubber reactor 27 upwards through the scrubber reactor. The scrubber liquid is sprayed by means of spray means in the reactor 27 with a specific droplet size, which also depends on the kind of the impurity to be removed. The impurities, which may be for example in the form of particles or chemical compositions, react with the scrubber liquid and fall down to the bottom of the reactor together with the scrubber liquid. The scrubber liquid containing the impurities is treated in a separate or integrated liquid treating system 28. Output from the module is cool and partially cleaned gas, which can be lead from the module through a channel 29 to a cleaning module 12 comprising filters.

For a complete cleaning of the produced gas one or more additional gas cleaning modules 12 comprising a cleaning device comprising at least one filter or a series of filters 13a, 13b, 13c and 13d can be coupled to the system. Filters that may be used can be for example textile and/or electric filters. The composition of filters used is governed by the composition of the organic material loaded in the system and the different compounds which need to be separated. For pure biomass gasification a textile filter could prove to be sufficient, but when treating more aggressive waste types, such as for example PCB-oils, aromatic organic compounds, war gas, tires and CFC:s, the cleaning needs to be more elaborate. The cleaning is divided into different modules which ensure that regardless of the waste to be treated sufficient cleaning of the gas can be conducted.

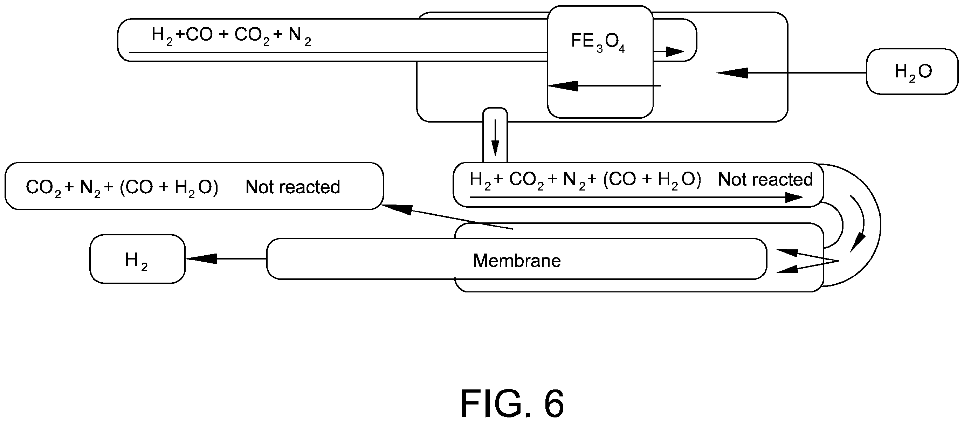

When the product gas obtained from the cleaning modules has a desired grade of purity the gas is fed to a water-gas-shift and hydrogen separation module 14 comprising a water-gas-shift reactor 30. The module may further comprise a pressure swing device 31 and a membrane separation device 32, as schematically shown in figure 2. The product gas entering the water-gas-shift and hydrogen separation is clean gas comprising carbon monoxide (CO), hydrogen (H₂), carbon dioxide (CO₂) and nitrogen (N₂). Figure 6 schematically depicts how more hydrogen is generated through a water-gas-shift reaction where carbon monoxide is reacted with water over a catalytic material. The water gas shift reactors based on the above-defined reaction and suitable for use in the present invention are well known in the art and are not therefore closely defined herein.

After the shift reaction the hydrogen is separated for example by using a membrane, a technology which is well known in the art, and the mixed gases are re-circulated to enhance the output of hydrogen. Also other conventional technologies known in the art can be used to separate the hydrogen. During the separation hydrogen products with different purities can be obtained. The hydrogen gas obtained may contain traces of other gases, such as carbon dioxide or it can be highly pure containing traces of other gases in ppm level. The gas that is not completely pure can be used in some fuel cell applications or as a reduction in processes that are not sensible for carbon dioxide. The highly pure hydrogen gas can be used for example in steel industry which requires a very high purity of the hydrogen. Through the present invention it is easy to adjust the process for different requirements since a desirable amount of cleaning modules can be arranged in the process due to the modular structure of the system.

The purified hydrogen can be stored for short periods of time by means of compressor and buffer equipment, which are preferably contained in a separate compressor module 33, as schematically shown in figure 2. Depending on the customers fluctuations in demand for hydrogen a buffer system is used to ensure that the customer always has hydrogen available. This module consists of at least one low pressure hydrogen compressor. The hydrogen can be then stored in a buffer storage 34, as schematically shown in figure 2, which comprises at least one pressure vessel as a temporary buffer for hydrogen gas. The pressure vessel can also have the dimensions of a standard container.

When gasifying for example biomass or organic waste into hydrogen, carbon dioxide can be separated in the process as a secondary product. The obtained carbon dioxide can be compressed and used for instance in paper industry for pH-regulatory applications. Carbon dioxide can be also used in the beverage industry for carbonated beverages. Carbon dioxide is also used as an important gas for firefighting equipment and for filling automated life-jackets. This separation makes it possible to harness the carbon dioxide and deposit it, either pressurized in cylinders, or, if the proper infrastructure is available, in bedrock surrounding oil wells or by binding it for example to cement. Hence the invention can actively reduce the amount of carbon dioxide in the atmosphere.

The system according to the present invention may comprise more than one plasma generator that is powered with an alternating current and more than one gasification module. However the system comprises at least one gasification module as described above. The system further comprises at least one gas cleaning module, but depending on the desired quality of the hydrogen more than one cleaning modules may be incorporated to the system. Further, the system comprises at least one water-gas shift and hydrogen separation module. The system can comprise several modules of the same or different kind. The additional modules can be selected from the group consisting of a loading module, gasification module, cleaning module, water-gas-shift and hydrogen separation module, hydrogen buffer module, carbon dioxide harnessing module and a control module, in which the data system required to control the system are provided, all depending on the individual needs of the system.

In the above description particular embodiments of the present invention have been disclosed. Other modifications of the present invention shall be apparent to those skilled in the art from the teachings herein within the scope of the following claims.

## Claims

1. A flexible modular system (1) for the production of hydrogen from organic material in the form of solid, liquid or gas, which system comprises:
(i) at least one loading device or loading module (2);
(ii) at least one gasification module (7) comprising at least one plasma generator (8), which is powered with an alternating current;
(iii) at least one gas cooling module (11);
(iv) at least one gas cleaning module (12) comprising at least one gas cleaning device;
(v) at least one water-gas-shift and hydrogen separation module (14); wherein
each of the modules is constructed as a standard container having a standard size of a standard ISO-container and is adapted to be transported on a transport vehicle and which modules are connected to each other by means of an interface which comprises coupling means (19a, 19b, 19c, 19d) and connections for a gas (15), and electric power and communication (16), and wherein the plasma gas is directed from the discharge compartment (24) of the generator (8) comprising electrodes through an orifice (25) to a chamber (26) outside the discharge compartment (24) in which chamber (26) the plasma gas interacts with the organic material.

2. The system according to claim 1, wherein the interface in adjacent modules has same specifications and is connectable to the interface of the adjacent module.

3. The system according to claim 1 or 2, wherein two or more cleaning modules (12) are used to purify the gas, so that the required level of purity of hydrogen is obtained.

4. The system according to any one of the preceding claims, wherein the plasma generator (8) is a three phase plasma generator.

5. The system according to any one of the preceding claims, wherein the system further comprises one or more additional modules selected from the group consisting of a loading module, gasification module, cleaning module, and water-gas-shift and hydrogen separation module.

6. The system according to any one of the preceding claims, wherein the coupling means are flexible.

7. The system according to any one of the preceding claims, wherein the interface comprises a flange (18) of resilient material which constitutes a weather shield for the interface.

8. The system according to any one of the preceding claims, wherein the gasification module is insulated with heat resistant materials and is adapted to withstand temperatures up to about 1200-1700°C.

## Patentansprüche

1. Flexibles Modularsystem (1) zur Herstellung von Wasserstoff aus organischem Material in Form von Feststoff, Flüssigkeit oder Gas, welches System umfasst:
(i) zumindest eine Beladungsvorrichtung oder ein Beladungsmodul (2);
(ii) zumindest ein Vergasungsmodul (7), das zumindest einen mit einem Wechselstrom angetriebenen Plasmagenerator (8) umfasst;
(iii) zumindest ein Gaskühlungsmodul (11);
(iv) zumindest ein Gasreinigungsmodul (12), das zumindest eine Gasreinigungsvorrichtung umfasst;
(v) zumindest ein Wasser-Gas-Shift- und Wasserstofftrennmodul (14); wobei
jedes der Module als ein Standard-Container ausgestaltet ist, welcher eine Standardgröße eines Standard-ISO-Containers aufweist und dafür ausgelegt ist, auf einem Transportfahrzeug transportiert zu werden, und welche Module durch eine Schnittstelle miteinander verbunden sind, die Kopplungsmittel (19a, 19b, 19c, 19d) und Verbindungen für ein Gas (15) und eine elektrische Leistung sowie Kommunikation (16) umfasst, und
wobei das Plasmagas von der Abgabekammer (24) des Elektroden umfassenden Generators (8) durch eine Öffnung (25) zu einer Kammer (26) außerhalb der Abgabekammer (24) geleitet wird, in welcher Kammer (26) das Plasmagas mit dem organischen Material in Wechselwirkung steht.

2. System nach Anspruch 1, wobei die Schnittstelle in benachbarten Modulen die gleichen Spezifikationen aufweist und mit der Schnittstelle des benachbarten Moduls verbindbar ist.

3. System nach Anspruch 1 oder 2, wobei zwei oder mehrere Reinigungsmodule (12) zur Reinigung des Gases verwendet werden, damit der erforderliche Reinheitsgrad von Wasserstoff erhalten wird.

4. System nach einem der vorhergehenden Ansprüche, wobei der Plasmagenerator (8) ein Dreiphasen-Plasmagenerator ist.

5. System nach einem der vorhergehenden Ansprüche, wobei das System ferner eines oder mehrere zusätzlichen Module umfasst, die aus der aus einem Beladungsmodul, Vergasungsmodul, Reinigungsmodul und Wasser-Gas-Shift- und Wasserstofftrennmodul bestehenden Gruppe ausgewählt sind.

6. System nach einem der vorhergehenden Ansprüche, wobei die Kopplungsmittel flexibel sind.

7. System nach einem der vorhergehenden Ansprüche, wobei die Schnittstelle einen Flansch (18) aus nachgiebigem Material umfasst, welches einen Witterungsschutz für die Schnittstelle bildet.

8. System nach einem der vorhergehenden Ansprüche, wobei die Vergasungsmodul mit hitzebeständigen Materialien isoliert ist und dafür ausgelegt ist, Temperaturen von bis zu etwa 1200-1700° C standzuhalten.

## Revendications

1. Système modulaire flexible (1) pour la production d'hydrogène à partir de matière organique sous la forme de solide, de liquide ou de gaz, lequel système comprend :
(i) au moins un dispositif de chargement ou un module de chargement (2) ;
(ii) au moins un module de gazéification (7) comprenant au moins un générateur de plasma (8) alimenté par un courant alternatif ;
(iii) au moins un module de refroidissement de gaz (11) ;
(iv) au moins un module de nettoyage de gaz (12) comprenant au moins un dispositif de nettoyage de gaz ;
(v) au moins un module de décalage d'eau-gaz et de séparation d'hydrogène (14) ;
dans lequel
chacun des modules est construit comme un conteneur standard ayant une taille standard d'un conteneur ISO standard et est adapté pour être transporté sur un véhicule de transport, et lesdits modules sont connectés l'un à l'autre au moyen d'une interface qui comprend des moyens de couplage (19a, 19b, 19c, 19d) et des connexions pour un gaz (15), et l'énergie électrique et la communication (16), et
dans lequel le gaz plasmagène est dirigé depuis le compartiment de décharge (24) du générateur (8) comprenant des électrodes à travers un orifice (25) vers une chambre (26) à l'extérieur du compartiment de décharge (24), chambre (26) dans laquelle le gaz plasmagène interagit avec le matériau organique.

2. Système selon la revendication 1, dans lequel l'interface dans des modules adjacents a les mêmes spécifications et peut être connectée à l'interface du module adjacent.

3. Système selon la revendication 1 ou 2, dans lequel deux ou plusieurs modules de nettoyage (12) sont utilisés pour purifier le gaz de manière à obtenir le niveau requis de pureté de l'hydrogène.

4. Système selon l'une quelconque des revendications précédentes, dans lequel le générateur de plasma (8) est un générateur de plasma triphasé.

5. Système selon l'une quelconque des revendications précédentes, dans lequel le système comprend en outre un ou plusieurs modules supplémentaires choisis dans le groupe comprenant un module de chargement, un module de gazéification, un module de nettoyage et un module de décalage eau-gaz et de séparation d'hydrogène.

6. Procédé selon l'une quelconque des revendications précédentes, dans lequel les moyens de couplage sont flexibles.

7. Procédé selon l'une quelconque des revendications précédentes, dans lequel l'interface comprend une bride (18) de matériau élastique qui constitue un écran de protection contre les intempéries pour l'interface.

8. Procédé selon l'une quelconque des revendications précédentes, dans lequel le module de gazéification est isolé avec des matériaux résistant à la chaleur et est adapté pour résister à des températures allant jusqu'à environ 1200-1700°C.
